# DEMANDE DE BREVET EUROPEEN

(11) **EP 3 967 133 A1**
(43) Date de publication de la demande: **16.03.2022**
(21) Numéro de dépôt: 21193742.0
(22) Date de dépôt: 30.08.2021
(51) Int. Cl.: A01G 3/00, A01G 3/04

(54) **CARTER DE DISPOSITIF DE LAMIER D'ÉLAGAGE, ET LAMIER ÉQUIPÉ D'UN TEL CARTER**

(30) Priorité: 09.09.2020 FR 2009195
(71) Demandeur: Kirogn, 17500 Villevaxier (FR)
(72) Inventeur: COLLARD, Yannick, 51150 Condé sur Marne (FR)
(74) Mandataire: Cabinet Bleger-Rhein-Poupon

(57) **Abrégé**

Carter de dispositif de lamier, ce dernier comportant, sur un châssis (1) une juxtaposition de moyens de coupe circulaires (3), équipés de lames (33) montées en fléaux.

Il comporte :
- une paroi de fond (24) disposée du côté des moyens d'entraînement (3)
- sur un bord longitudinal, du côté d'une partie dite arrière (D), une paroi longitudinale (20) longeant l'espace volumique dans lequel évoluent les moyens de coupe (3), et une paroi qui recouvre partiellement cet espace volumique,
- sur chacun de ses deux bords transversaux, une paroi (21, 22) fermant à ses extrémités l'espace volumique dans lequel évoluent les moyens de coupe (3),
- tandis que en la paroi transversale d'extrémité (2), dite basse car positionnée inférieurement lorsque le dispositif de lamier est utilisé verticalement, comporte une paroi (26) qui couvre partiellement l'espace volumique dans lequel évolue le moyen de coupe (3) extrême, et constitue une zone (27) de broyage.

## Description

La présente invention a pour objet un carter de dispositif de lamier d'élagage, utilisable notamment dans le domaine de l'entretien des espaces végétaux, non limitativement pour la taille de haies. Elle a également pour objet un dispositif de lamier d'élagage comportant un tel carter.

De manière habituelle, pour ce genre d'opérations, on utilise une épareuse, de type muni d'un rotor à fléaux, avec pour inconvénient de réaliser un hachage de la végétation plutôt qu'une coupe.

Un dispositif de lamier permet une coupe franche et propre, et à cet effet il comporte sur un châssis destiné à être monté à l'extrémité d'un bras, une juxtaposition d'au moins deux moyens de coupe circulaires, qui agissent dans un même plan ou dans des plans parallèles très proches, et dont les champs d'action se pénètrent ou se chevauchent de manière à former une ligne de coupe. En pratique, un dispositif de lamier de réaliser une taille selon un plan horizontal de la partie supérieure d'une haie, et selon un plan vertical pour traiter au moins l'une des faces latérales d'une haie, le long de laquelle il est déplacé en étant maintenu verticalement.

Le bras qui porte le lamier est relié à celui-ci soit à une extrémité soit en position centrale, cela dépendant de l'usage auquel est destiné le lamier. On comprendra que si le lamier est destiné à réaliser des coupes verticales et horizontales, le bras est d'évidence solidarisé à une extrémité du lamier, pour notamment permettre une coupe horizontale plus profonde.

En ce qui concerne les moyens de coupe, ils consistent essentiellement soit en des disques à bord dentelé de type scie, soit en des plateaux munis de lames montées en fléaux.

Dans le cas de disques de type scie, il y a chevauchement des champs d'action ceux-ci, dans des plans différents. La proportion de chevauchement des disques peut varier, de même que l'écartement entre les différents plans.

De manière avantageuse, dans le cas de plateaux à fléaux on peut, par le décalage angulaire des fléaux, obtenir un plan de coupe parfaitement plan.

On connaît déjà de nombreux dispositifs de lamier par exemple ceux des documents CN 111 466 218 et EP 2 346 314 comportant dans un carter des ensembles de coupe comprenant chacun deux plateaux munis de deux lames montées en fléaux. Les plateaux de deux ensembles de coupe voisins sont décalés, ils sont dans des plans différents, et par conséquent les lames qu'ils portent le sont aussi, et pour compenser cette différence de niveau, les arbres qui portent les plateaux sont inclinés en sorte que les lames ne soient pas parallèles au plan de coupe, mais inclinées par rapport à celui-ci, ce qui présente l'inconvénient de générer une coupe moins nette.

On connaît aussi le lamier d'élagage commercialisé par la Société danoise « Greentec », qui consiste en un lamier à couteaux, en l'occurrence il comporte quatre ensembles de coupe, qui comprennent chacun deux plateaux équipés chacun de trois lames montées en fléaux.

Quel que soit le dispositif de lamier d'élagage considéré, il présente l'inconvénient qu'après l'opération de coupe il soit nécessaire de procéder au ramassage des produits issus de la coupe, ce qui peut être long et fastidieux, et nécessite l'utilisation de matériel complémentaire.

Pour pallier cet inconvénient, il a été proposé de broyer ces produits issus de la coupe, avant de les laisser tomber au sol pour constituer un paillis, dans une opération couramment appelée « mulching ».

Un tel dispositif de lamier-broyeur est par exemple décrit dans le document FR 2 917 571, il comprend un carter dans lequel agit un broyeur et sur le bord duquel est disposé, en avant dudit broyeur, un lamier. L'inconvénient d'un tel dispositif réside essentiellement dans son encombrement, lequel nuit énormément à son manœuvrement.

La présente invention a pour but de proposer un carter de dispositif de lamier d'élagage permettant de réaliser non seulement une coupe franche de la végétation à traiter, mais également le broyage des produits issus de la coupe, tout en étant d'une conception peu encombrante et donc d'une manœuvrabilité aisée.

Par ailleurs, selon les travaux à effectuer, et plus particulièrement selon la précision de la coupe à [AB1] [AB2] réaliser, on utilise soit un dispositif de lamier équipé de scies, ou équipé de fléaux ou couteaux, en sorte que de manière idéale il est nécessaire de disposer de deux dispositifs de lamier.

Le carter de dispositif de lamier d'élagage selon l'invention, où ledit dispositif de lamier, comporte, sur un châssis portant des moyens d'entraînement, une juxtaposition d'au moins deux moyens de coupe circulaires, qui comportent chacun au moins un plateau porté par un arbre mû en rotation par lesdits moyens d'entraînement, et équipé de lames montées en fléaux dont le champ d'action pénètre ou chevauche le champ d'action des lames montées en fléaux du moyen de coupe voisin, de manière à former une ligne de coupe, ledit carter se caractérise en ce qu'il comporte :
- une paroi de fond disposée du côté des moyens d'entraînement et de laquelle émergent les arbres portant les plateaux,
- sur un bord longitudinal, une partie, dite avant, ouverte et destinée à entrer en contact en premier avec la végétation à traiter,
- sur l'autre bord longitudinal, du côté d'une partie dite arrière, une paroi longitudinale solidaire perpendiculairement de ladite paroi de fond et longeant l'espace volumique dans lequel évoluent lesdits moyens de coupe, et dont le bord longitudinal opposé à celui solidaire de ladite paroi de fond porte, parallèlement à cette dernière, une paroi qui recouvre partiellement ledit espace volumique,
- sur chacun de ses deux bords transversaux, une paroi solidaire dudit fond ainsi que de ladite paroi longitudinale, en sorte de fermer à ses extrémités l'espace volumique dans lequel évoluent lesdits moyens de coupe,
et en ce que la paroi transversale d'extrémité, dite basse car positionnée inférieurement lorsque le dispositif de lamier est utilisé verticalement, comporte une paroi parallèle à la paroi de fond et qui couvre partiellement ledit espace volumique dans lequel évolue le moyen de coupe extrême, en sorte de constituer en association avec ladite paroi de fond, ladite paroi longitudinale et ladite paroi d'extrémité une zone de réception des résidus de coupe en vue de leur broyage par ledit moyen de coupe extrême.

Le dispositif de lamier équipé d'un carter selon l'invention permet de broyer les résidus de coupe suffisamment finement pour qu'ils puissent être laissés au sol, et donc ne pas nécessiter qu'ils soient ramassés.

Dans le cas d'une coupe horizontale, on favorisera, par le choix des sens de rotation des moyens de coupe, le déplacement des produits de la coupe vers la zone de réception des résidus, qui pourront alors être évacués extérieurement à la haie. Dans le cas d'une coupe verticale, la gravité permettra d'accentuer le déplacement des produits de la coupe vers la zone de réception des résidus afin d'achever le broyage par le moyen de coupe extrême.

Selon une caractéristique additionnelle du carter de dispositif de lamier selon l'invention, la paroi longitudinale est conformée pour envelopper étroitement l'espace volumique dans lequel évoluent les moyens de coupe.

Selon une autre caractéristique additionnelle du carter de dispositif de lamier selon l'invention, la paroi longitudinale présente une succession, dans le sens longitudinal, de parties intérieurement concaves.

Selon une autre caractéristique additionnelle du carter de dispositif de lamier selon l'invention, il est en outre conformé pour l'extraction du broyat issu de l'opération de coupe et de broyage.

Cette caractéristique du carter permet de guider le broyat afin qu'il puisse être jeté au sol pour servir de paillis.

Selon une variante du carter selon l'invention, il est en outre adapté à la canalisation du broyat issu de l'opération de coupe.

La canalisation du paillis permet, si cela est souhaité, d'associer au dispositif de lamier selon l'invention, un moyen de collecte et d'évacuation du broyât.

La présente invention a également pour objet un dispositif de lamier comportant un carter tel que décrit précédemment.

Selon une caractéristique additionnelle de dispositif de lamier selon l'invention, chacun des moyens de coupe comporte en outre, porté par le même arbre et disposé entre le châssis et le plateau, au moins un second plateau équipé de lames montées en fléaux, dont le champ d'action pénètre ou chevauche le champ d'action des lames montées en fléaux du second plateau du moyen de coupe voisin.

Une telle configuration permet une coupe plus fine de la végétation. Les lames des premiers plateaux agissent dans le plan de coupe et permettent de réaliser la coupe, tandis que les lames des seconds plateaux sont essentiellement dédiées au broyage.

On notera un autre avantage, le parfait enveloppement des moyens de coupe et le contrôle de l'acheminement des résidus, permettent de limiter les projections.

On notera que de manière avantageuse, chacun des moyens de coupe, constitué d'un arbre portant au moins deux plateaux, est amovible pour pouvoir être remplacé par un moyen de coupe classique, comprenant un seul plateau à fléaux ou à disque de type scie. Ainsi, selon les besoins, à savoir par exemple élaguer une haie ou entretenir celle-ci, il est possible d'utiliser le même carter, en y installant le moyen de coupe adéquat.

Les avantages et les caractéristiques du carter de dispositif de lamier d'élagage selon l'invention, ressortiront plus clairement de la description qui suit et qui se rapporte au dessin annexé, lequel en représente un mode de réalisation non limitatif.

Dans le dessin annexé:
- la figure 1 représente une vue schématique en perspective d'un dispositif de lamier d'élagage selon l'invention.
- la figure 2 représente une vue schématique en plan de dessous du même dispositif.
- la figure 3 représente une vue schématique en perspective d'une partie du même dispositif.

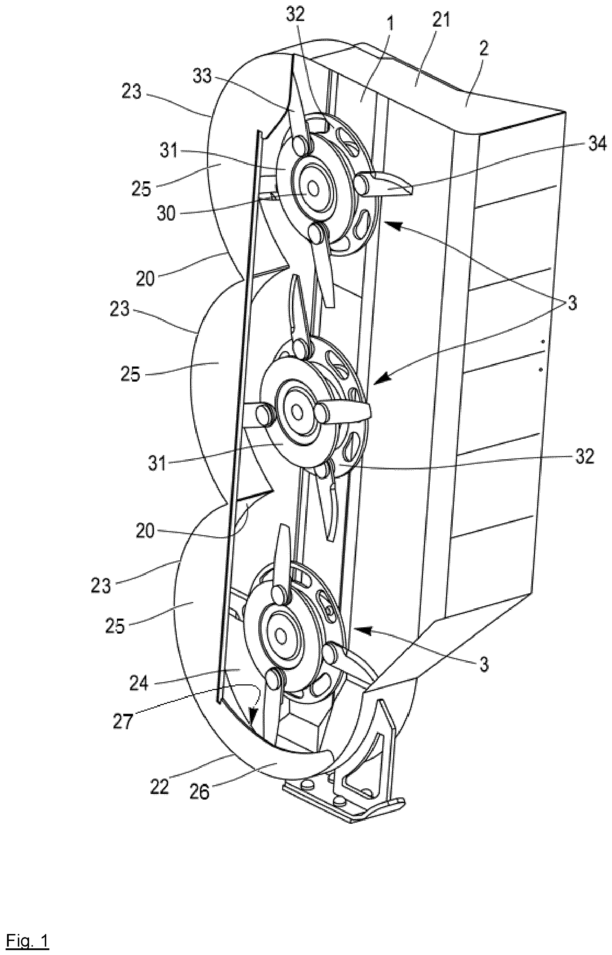

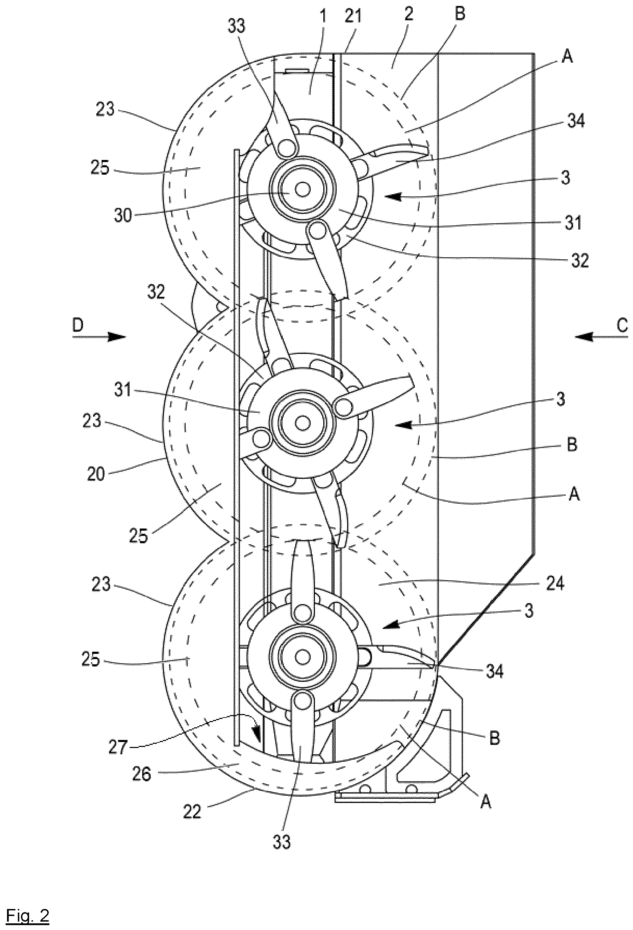

En référence à ces figures 1 et 2, on peut voir un dispositif de lamier d'élagage qui comporte un châssis 1 portant un carter 2 selon l'invention, et dans une position verticale, celle dans laquelle le dispositif de lamier est très majoritairement utilisé.

Le dispositif de lamier comporte des moyens de coupe 3 disposés côté-à-côté, en l'occurrence il en comporte trois.

Chacun de ces moyens de coupe 3 comprend un arbre 30, solidaire du châssis 1 et apte à être entraîné en rotation axiale au travers de moyens d'entraînements non visibles sur les figures, sont montés et calés en rotation deux plateaux circulaires, l'un 31 à l'extrémité libre de l'arbre 30, et l'autre 32 entre le plateau 31 et le châssis 1.

Le plateau 31 porte deux lames 33, diamétralement opposées et montées en fléaux, tandis que le plateau 32 porte également deux lames 34, diamétralement opposées et montées en fléaux.

Comme cela est visible sur la figure 2, les extrémités libres des lames 33 décrivent un cercle A, tandis que les extrémités libres des lames 34 décrivent un cercle B.

Les plateaux 31 s'étendent dans un même plan, et les cercles A des moyens de coupes 3 sont tangents deux-à-deux, éventuellement avec possibilité de se couper, de manière à définir une ligne de coupe parfaitement rectiligne. Les lames 33 d'un moyen de coupe 3 sont décalées angulairement par rapport aux lames du moyen de coupe 3 voisin, en sorte d'éviter tous contacts.

Les plateaux 32 s'étendent également dans un même plan, par contre les cercles B sont plus grands que les cercles A et se coupent partiellement deux-à-deux. Les lames 34 sont également décalées angulairement d'un moyen de coupe 3 par rapport au voisin.

A cet effet, comme on peut le voir sur les figures, le carter 2 selon l'invention est très enveloppant. Il est largement ouvert du côté avant C qui est destiné à entrer en contact avec la végétation à traiter, et il est fermé du côté arrière D, lequel est délimité d'une part par une paroi longitudinale 20, et d'autre part par des parois transversales d'extrémités 21 et 22, disposées respectivement en haut et en bas du carter 2, relativement à sa configuration d'utilisation.

On peut également constater que la paroi 20 est constituée d'une succession dans le sens longitudinal, de parties 23 concaves du côté intérieur du carter 2, chacun dédiée à abriter étroitement un moyen de coupe 3.

De plus, chaque moyen de coupe 3 est logé étroitement entre d'une part le fond 24 du carter 2 du côté du châssis 1, et d'autre part une portion de paroi 25, parallèle au fond 21 et qui s'étend depuis la paroi 20, en sorte de couvrir environ un quart de l'espace volumique décrit par les lames 33 et 34.

Les espaces délimités par le carter 2 pour chaque moyen de coupe, permettent de contenir la matière issue de la coupe réalisée par les lames 33, dans le but qu'elle soit broyée par les lames 34.

Les cercles B décrits par les lames 34 sont plus grands que les cercles A décrits par les lames 33, cela permet aux lames 34 d'agir également sur une partie de la matière coupée par les lames 33 du ou des moyens de coupe 3 voisins, et de réaliser un broyage plus efficace.

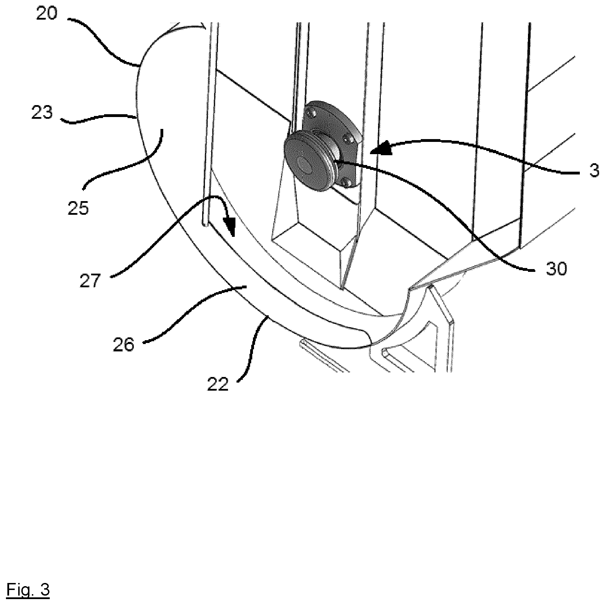

En référence maintenant à la figure 3, on peut voir plus précisément la partie basse du dispositif de lamier et plus exactement du carter 2. Cette partie basse comprend une zone 27, délimitée par les parois 22, 20 et 24, où est réalisée l'ultime opération de broyage.

En pratique, les lames 33 coupent la végétation, alors que les lames 34 la broient, ce qui est réalisé en coopération avec le carter 2. Les résidus issus du broyage sont acheminés, par gravité et par les moyens de coupe 3, jusque dans la zone 27 où le moyen de coupe 3 qui y opère, dont n'est représenté que l'arbre 30 sur la figure 3, achève le broyage.

La matière végétale broyée, est projetée au sol, où elle peut servir de paillis. Selon une variante, le dispositif de lamier peut être associé à un moyen de collecte permettant la récupération du broyat à partir de la zone 27, et son évacuation.

## Revendications

1. Carter de dispositif de lamier d'élagage, ledit dispositif de lamier comportant, sur un châssis (1) portant des moyens d'entraînement, une juxtaposition d'au moins deux moyens de coupe circulaires (3), qui comportent chacun au moins un plateau (31) porté par un arbre (30) mû en rotation par lesdits moyens d'entraînement, et équipé de lames (33) montées en fléaux dont le champ d'action (A) pénètre ou chevauche le champ d'action (A) des lames (33), montées en fléaux du moyen de coupe (3) voisin, de manière à former une ligne de coupe, ledit carter se **caractérise en ce qu'**il comporte :
- une paroi de fond (24) disposée du côté des moyens d'entraînement (3) et de laquelle émergent les arbres (30) portant les plateaux (31),
- sur un bord longitudinal, une partie, dite avant (C), ouverte et destinée à entrer en contact en premier avec la végétation à traiter,
- sur l'autre bord longitudinal, du côté d'une partie dite arrière (D), une paroi longitudinale (20) solidaire perpendiculairement à ladite paroi de fond (24) et longeant l'espace volumique dans lequel évoluent lesdits moyens de coupe (3), et dont le bord longitudinal opposé à celui solidaire de ladite paroi de fond (24) porte, parallèlement à cette dernière, une paroi qui recouvre partiellement ledit espace volumique,
- sur chacun de ses deux bords transversaux, une paroi (21, 22) solidaire de ladite paroi de fond (24) ainsi que de ladite paroi longitudinale (20), en sorte de fermer à ses extrémités l'espace volumique dans lequel évoluent lesdits moyens de coupe (3),
et **en ce que** la paroi transversale d'extrémité (22), dite basse car positionnée inférieurement lorsque le dispositif de lamier est utilisé verticalement, comporte une paroi (26) parallèle à la paroi de fond (24) et qui couvre partiellement ledit espace volumique dans lequel évolue le moyen de coupe (3) extrême, en sorte de constituer en association avec ladite paroi de fond (24), ladite paroi longitudinale (20) et ladite paroi d'extrémité (22) une zone (27) de réception des résidus de coupe en vue de leur broyage par ledit moyen de coupe (3) extrême.

2. Dispositif de carter (2) selon la revendication 1, **caractérisé en ce que** la paroi longitudinale (20) est conformée pour envelopper étroitement l'espace volumique dans lequel évoluent les moyens de coupe (3).

3. Dispositif de carter (2) selon la revendication 2, **caractérisé en ce que** la paroi longitudinale (20) présente une succession, dans le sens longitudinal, de parties (23) intérieurement concaves.

4. Dispositif de carter (2) selon l'une quelconque des revendications 1 à 3, **caractérisé en ce qu'**il est en outre conformé pour l'extraction du broyat issu de l'opération de coupe et de broyage.

5. Dispositif de carter (2) selon l'une quelconque des revendications 1 à 4, **caractérisé en ce qu'**il est en outre conformé pour l'extraction du broyat issu de l'opération de coupe et de broyage.

6. Dispositif de carter (2) selon l'une quelconque des revendications 1 à 5, **caractérisé en ce qu'**il est adapté à la canalisation du broyat issu de l'opération de coupe, et associé à un moyen de collecte et d'évacuation du broyât.

7. Dispositif de lamier, **caractérisé en ce qu'**il est équipé d'un carter (2) selon l'une quelconque des revendications 1 à 6.

8. Dispositif de lamier (2) selon la revendication 7, **caractérisé en ce que** chacun des moyens de coupe (3) comporte en outre, porté par le même arbre (30) et disposé entre le châssis (1) et le plateau (31), au moins un second plateau (32) équipé de lames (34) montées en fléaux, dont le champ d'action (B) pénètre ou chevauche le champ d'action (B) des lames (34) montées en fléaux dudit second plateau (32) du moyen de coupe (3) voisin.
